# EUROPEAN PATENT APPLICATION

(11) **EP 4 470 640 A1**
(43) Date of publication of application: **04.12.2024**
(21) Application number: 23746938.2
(22) Date of filing: 24.01.2023
(51) Int. Cl.: A63B 71/06, A63B 69/00

(54) **INFORMATION PROCESSING DEVICE, INFORMATION PROCESSING METHOD, PROGRAM, AND INFORMATION ANALYSIS SYSTEM**

(30) Priority: 28.01.2022 JP 2022012096
(71) Applicant: Sony Group Corporation, Tokyo 108-0075 (JP)
(72) Inventor: AKAMA, Ayako, Tokyo 108-0075 (JP); NAGANO, Hidetoshi, Tokyo 108-0075 (JP)
(74) Representative: 2SPL Patentanwälte PartG mbB
(86) International application number: PCT/JP2023/002072
(87) International publication number: WO 2023/145727

(57) **Abstract**

An information processing apparatus includes a calculation unit that performs processing of generating a comparison image between a first motion that is one sample of a specific motion that is a human action and a second motion that is another sample of the specific motion by using skeleton capture data of the first motion and skeleton capture data of the second motion.

## Description

### TECHNICAL FIELD

The present technology relates to an information processing apparatus, an information processing method, a program, and an information analysis system, and relates to a technology field to perform analysis processing of a specific motion in sports or the like.

### BACKGROUND ART

In recent years, various analyses have been performed for the play of sports players such as baseball, softball, soccer, and basketball, and the analysis has been used for practice and game strategy.

For example, a GPS receiver is attached to a uniform or the like of a player to measure a running distance of the player during a game, so that an exercise load of the player can be obtained.

In addition, the Patent Document 1 described below discloses a technology capable of easily grasping a proficiency level of a motion, an improvement point of a form, and the like by specifying a target moving image and a comparison moving image from among a plurality of moving images obtained by capturing an image of a motion of a person who plays a ball game.

### CITATION LIST

### PATENT DOCUMENT

Patent Document 1: Japanese Patent Application Laid-Open No. 2021-145702

### SUMMARY OF THE INVENTION

### PROBLEMS TO BE SOLVED BY THE INVENTION

For example, various motions of a sports player have been video-recorded and the video has been watched repeatedly to analyze the states of the motions. However, there is a case where it is difficult to recognize movements of various parts of the body only by a recorded moving image.

In addition, data used for analysis of sports is often display of statistical information for each player and each game, and for example, it is difficult to analyze an arbitrary pitch to be analyzed comparing the arbitrary pitch with a similar pitch. Therefore, there is also a demand for an interface with which a difference can be more clearly recognized when comparing one motion with another motion.

Therefore, the present disclosure proposes a technology that makes it possible to more clearly compare one motion as a specific motion with another motion.

### SOLUTIONS TO PROBLEMS

An information processing apparatus according to the present technology includes a calculation unit that performs processing of generating a comparison image between a first motion that is one sample of a specific motion that is a human action and a second motion that is another sample of the specific motion by using skeleton capture data of the first motion and skeleton capture data of the second motion.

For example, the movement and the posture of a subject can be determined by using the skeleton capture data of the subject obtained from an image. Therefore, the comparison image is generated using the skeleton capture data regarding the specific motion.

### BRIEF DESCRIPTION OF DRAWINGS

Fig. 1 is an explanatory diagram of an information analysis system according to an embodiment of the present technology.
Fig. 2 is a block diagram of the information analysis system according to the embodiment.
Fig. 3 is a block diagram of an information processing apparatus included in the information analysis system according to the embodiment.
Fig. 4 is an explanatory diagram of a pitch data image according to the embodiment.
Fig. 5 is an explanatory diagram of a method of detecting different points according to the embodiment.
Fig. 6 is an explanatory diagram of a state in which a plot image is displayed in the pitch data image according to the embodiment.
Fig. 7 is an explanatory diagram of selection of a comparison pitch according to the embodiment.
Fig. 8 is an explanatory diagram of a pitch comparison image according to the embodiment.
Fig. 9 is an explanatory diagram of a time axis of the pitch comparison image according to the embodiment.
Fig. 10 is an explanatory diagram of the time axis of the pitch comparison image according to the embodiment.
Fig. 11 is a flowchart of processing during a game according to the embodiment.
Fig. 12 is a flowchart of processing at the time of score data acquisition according to the embodiment.
Fig. 13 is a flowchart of processing of the pitch data image according to the embodiment.
Fig. 14 is a flowchart of processing of the pitch comparison image according to the embodiment.

### MODE FOR CARRYING OUT THE INVENTION

Hereinafter, an embodiment will be described in the following order.

### <1. Configuration of information analysis system>

### <2. Pitch data image>

### <3. Pitch comparison image>

### <4. Processing example>

### <5. Summary and modification>

### <1. Configuration of information analysis system>

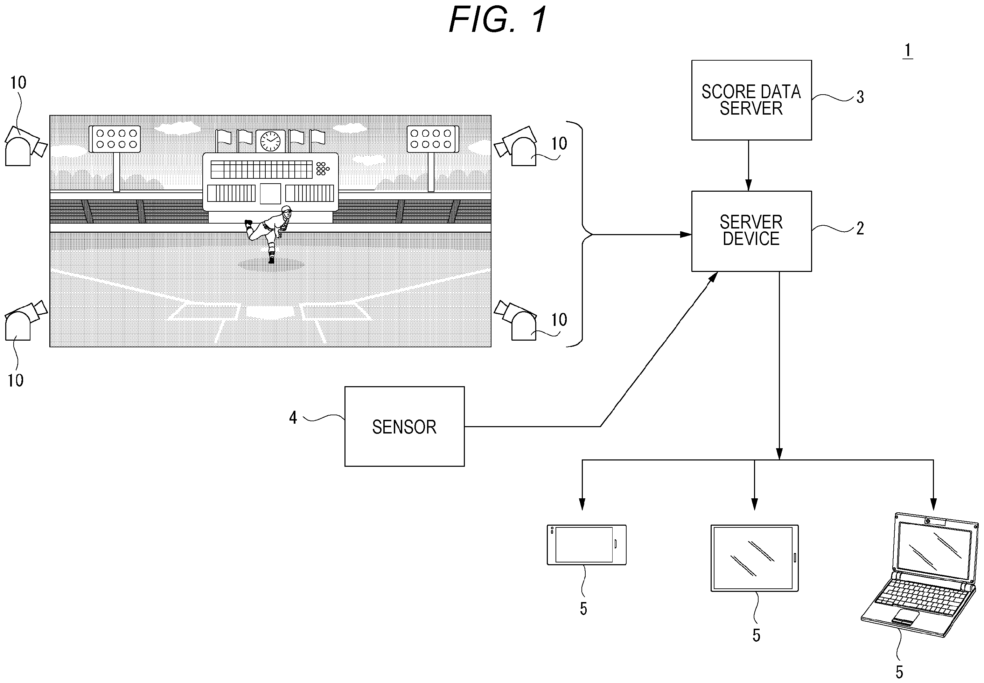

Fig. 1 illustrates an outline of an information analysis system 1 according to an embodiment.

The information analysis system 1 of Fig. 1 includes imaging devices 10, a server device 2, a score data server 3, a sensor 4, and terminal devices 5. These are connected via mutual wired communication, wireless communication, network communication, or the like.

For example, a plurality of the imaging devices 10 images an area of a subject in a stadium such as a baseball ground, for example, the situations of a game, from various positions. Note that, although the plurality of imaging devices 10 is illustrated, at least one imaging device 10 is only required to be provided.

In the present embodiment, an example of analyzing pitches of a pitcher in baseball or softball will be described. Therefore, the imaging devices 10 are arranged to image at least the position of the pitcher, that is, an area including the mound.

Then, in the information analysis system 1, skeleton capture data of a subject such as a pitcher is extracted from the images captured by the imaging devices 10, so that a pitching motion can be presented on the basis of the skeleton capture data.

In recent years, regarding the play of a sport such as soccer or basketball, there has been known a technology for estimating the posture and the position of a player/referee, the position/rotation of a ball, and the like in a designated field from an image obtained by a dedicated camera or information obtained by a sensor (acceleration sensor or GPS sensor) attached to a person (player) or an object (ball) related to the sport as an electronic performance and tracking systems (EPTS).

Specifically, the imaging device 10 captures an image for obtaining such EPTS data as the skeleton capture data.

In addition, the image captured by the imaging device 10 can also be used as a live-action image of a game or the like.

Note that, in the present disclosure, an "image" refers to both a moving image and a still image. For example, it is assumed that the imaging device 10 mainly captures a moving image, but for example, an image displayed on the terminal device 5 may be a moving image or a still image.

In addition, the "image" refers to an image actually displayed on a screen, but the "image" in the course of a signal process or on a transmission path until being displayed on the screen refers to image data.

The EPTS data generated on the basis of the images captured by the imaging devices 10 is transmitted to the server device 2. For example, in a case where an information processing apparatus (not illustrated) that records images captured by a plurality of the imaging devices 10 and generates the EPTS data on a stadium side such as a baseball ground is provided, the EPTS data generated by the information processing apparatus is transmitted to the server device 2.

Alternatively, the captured images obtained by the imaging devices 10 may be transmitted to the server device 2, and the EPTS data may be generated on the server device 2 side.

The sensor 4 is a sensor that detects the movement of a player, a ball, or the like. Specifically, a sensor attached to a player or a ball, such as the acceleration sensor or the GPS sensor described above, is assumed. The movement information of the player can also be obtained by the detection information of the sensor 4. Alternatively, the information of the sensor 4 can be used supplementally when the skeleton capture data is obtained or a posture or the like is estimated from an image. The detection information of the sensor 4 can also be used for the speed, rotation speed, trajectory, and the like of the ball.

The detection information of the sensor 4 may be transmitted to the server device 2, or may be input to the information processing apparatus (not illustrated) that generates the EPTS data on a stadium side such as a baseball ground.

The score data server 3 is, for example, an information processing apparatus of an association that generates and distributes the score data of baseball. Here, the score data server 3 is configured as a server device capable of transmitting the score data of a game to the server device 2.

The score data server 3 may sequentially transmit the score data to the server device 2 during the game, or may collectively transmit all the score data of the game after the game, for example.

In the case of baseball, the score data includes various types of information of a game as follows.

For example, the score data includes not only information of the entire game such as a score in each inning of the game and information of participating players but also information for each pitch of a pitch of a pitcher. The score data includes, for each pitch, the information of, for example, a pitching time, a pitcher's name, a batter's name, whether a batter is right-handed or left-handed, presence or absence of a runner on first base, second base, or third base, a runner's name, a strike/ball count, whether the pitch is a ball or a strike, an out count, a batting result (hit, swinging and miss, overlooking, foul, ground ball out, fly out, foul fly, etc.), a ball speed, a type of pitch, a rotation speed, a rotation axis, a course, and various types of other information.

The terminal device 5 is, for example, an information processing apparatus such as a smartphone, a tablet terminal, or a personal computer, and as the terminal device 5, for example, a device used by a person related to a baseball team such as an analyst of the baseball team is assumed. Then, the terminal device 5 is a device that presents various types of information for analyzing the motion of each player to the analyst or the like.

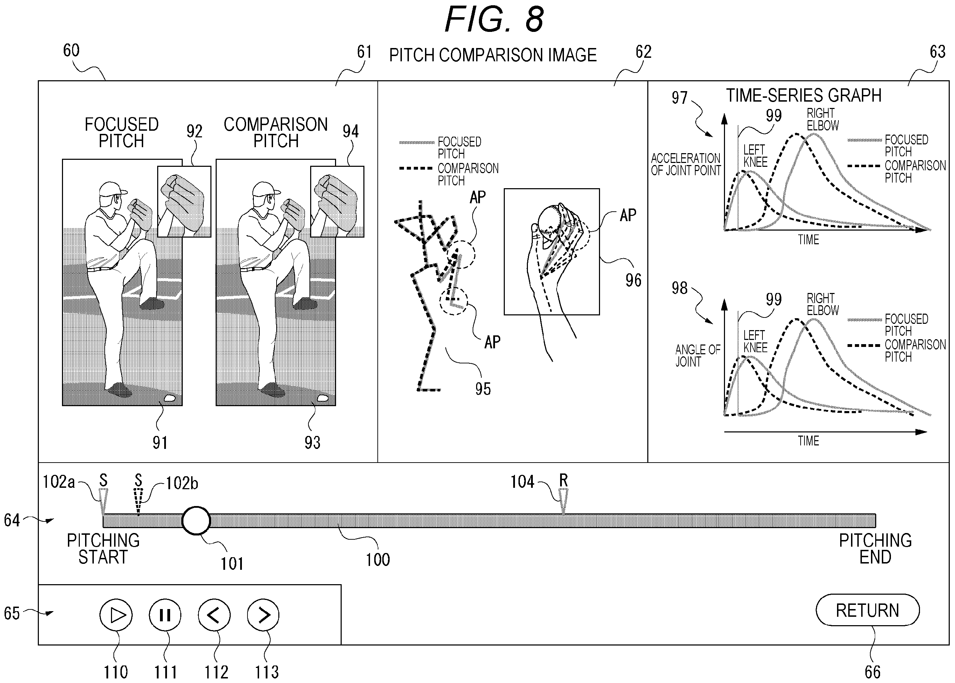

The server device 2 performs various types of processing for presenting the analysis information in the terminal device 5. For example, the server device 2 performs processing of generating a comparison image on the basis of the skeleton capture data of a subject generated from the images captured by the imaging devices 10. The comparison image is an image in which two or more samples as specific motions are extracted, and the motions are compared and presented. The specific motion is, for example, a pitching motion of a pitcher. The server device 2 generates a comparison image (pitch comparison image) that allows comparison of a pitching motion of a certain pitch of a certain pitcher with a pitching motion of another pitch of the same pitcher or another pitcher, and causes the comparison image to be displayed on the terminal device 5. The server device 2 generates the pitch comparison image by using the skeleton capture data for the pitching motion. A pitch comparison image 60 serving as an example of the comparison image will be described later in detail with reference to Fig. 8.

As the server device 2, an information processing apparatus that performs cloud computing, that is, a cloud server is assumed.

However, the processing for causing the comparison image to be displayed on the terminal device 5 may be performed by an information processing apparatus except for the cloud server. For example, it is also conceivable that an information processing apparatus such as a personal computer installed in a game venue has a function as the server device 2 and performs acquisition of skeleton capture data, processing of generating a comparison image, and the like. Furthermore, it is also conceivable that the terminal device 5 has a function as the server device 2 and performs acquisition of skeleton capture data, processing of generating a comparison image, and the like.

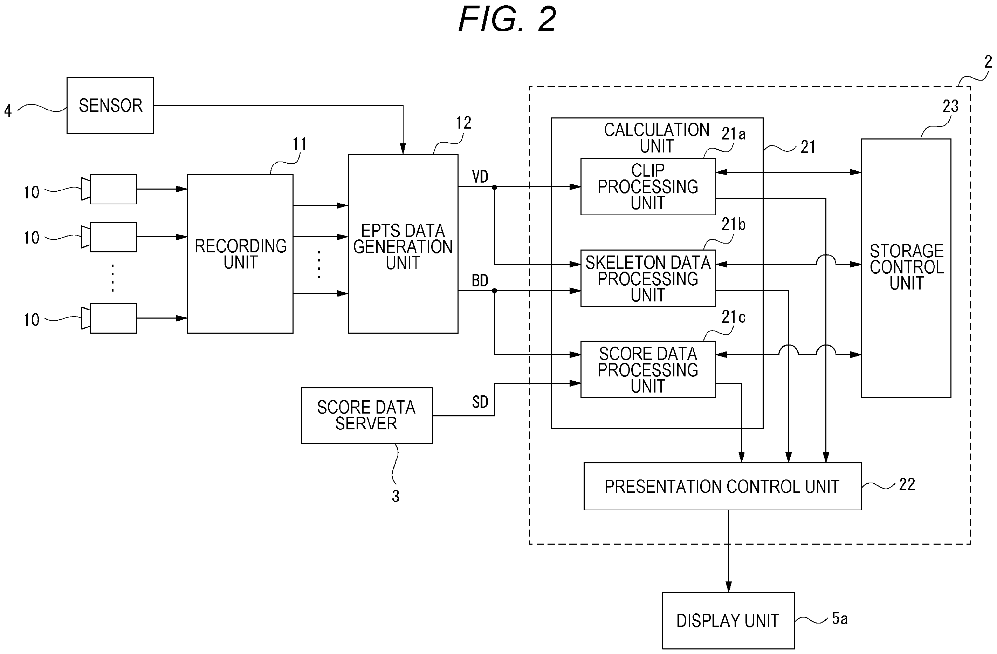

Fig. 2 illustrates an example of a functional configuration of the server device 2 and an input/output system related to the server device 2 in the information analysis system 1 of Fig. 1 described above.

The imaging devices 10 are configured as digital camera devices including an imaging element such as a charge coupled device (CCD) sensor or a complementary metal-oxide-semiconductor (CMOS) sensor, for example, and obtain a captured image as digital data. In the present example, each of the imaging devices 10 obtains a captured image as a moving image.

As described with reference to Fig. 1, each of the imaging devices 10 images the situations of a game in a baseball ground, in particular, at least the pitching motion of a pitcher, and is disposed at a predetermined position. Although the number of the imaging devices 10 is more than one and not particularly limited, it is advantageous that the number thereof is as large as possible in order to generate highly accurate EPTS data.

Each of the imaging devices 10 captures a moving image in a synchronized state, and outputs the captured image.

A recording unit 11 records each of the images captured by a plurality of the imaging devices 10 and supplies each captured image to an EPTS data generation unit 12.

The EPTS data generation unit 12 performs analysis processing on one or a plurality of captured images to generate EPTS data individually, integrates all the individual EPTS data to generate the EPTS data as a whole. The EPTS data includes, for example, positions of players (pitcher, fielder, batter, or runner) or the ball at each frame timing, skeleton capture data of the players, postures of the players based on the skeleton capture data, information of a rotation speed and a rotation direction of the ball, and the like.

In addition, the EPTS data generation unit 12 may generate the EPTS data by using not only the captured image but also information obtained by the sensor 4, that may be, for example, information from an acceleration sensor embedded in a ball or a GPS sensor attached to a uniform of the player.

The EPTS data generation unit 12 can generate, as the EPTS data of the entire game, for example, information for determining the pitching motion or speed or trajectory of a ball for each of all pitches of a pitcher during a game.

The EPTS data generation unit 12 can generate the EPTS data from a plurality of captured images obtained by a plurality of imaging devices 10, and can also generate the EPTS data from a plurality of captured images obtained by one imaging device 10. Furthermore, the EPTS data generation unit 12 can also generate the EPTS data from a plurality of images and information of one or a plurality of sensors, or can also generate the EPTS data from one captured image and information from one sensor.

The EPTS data (skeleton capture data BD) generated by the EPTS data generation unit 12 is transmitted to the server device 2. Image data VD captured by the imaging devices 10 is also transmitted to the server device 2 via the EPTS data generation unit 12, for example. In particular, the image data VD obtained by imaging the pitching motion of the pitcher is transmitted to the server device 2.

Note that, the EPTS data generation unit 12 may be provided in the server device 2. For example, in this case, images captured by the imaging devices 10 and the detection information of the sensor 4 are only required to be transmitted to the EPTS data generation unit 12 in the server device 2 via network communication or the like.

In addition, as described with reference to Fig. 1, the score data SD is sequentially transmitted from the score data server 3 to the server device 2.

The server device 2 includes an information processing apparatus such as a computer device, and is provided, by software, for example, with functions as a calculation unit 21, a presentation control unit 22, and a storage control unit 23.

The calculation unit 21 performs processing of generating a comparison image (pitch comparison image 60: see Fig. 8) between a first motion that is one sample of a specific motion that is a human action and a second motion that is another sample of the specific motion by using the skeleton capture data of the first motion and the skeleton capture data of the second motion.

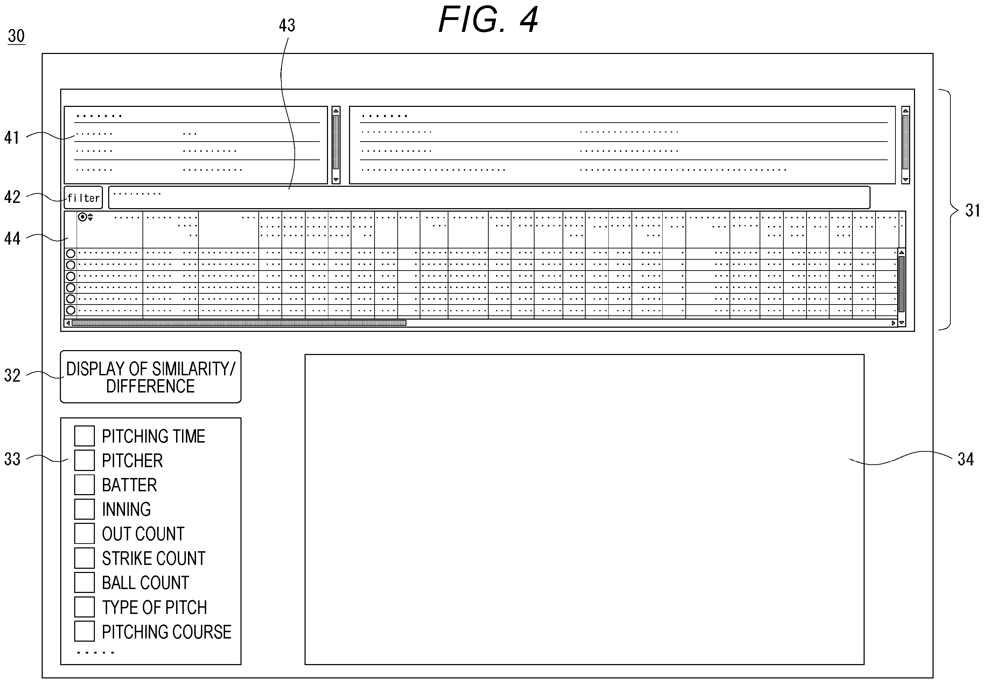

In addition, the calculation unit 21 performs processing of generating a pitch data image 30 (see Figs. 4, 6, and 7) to be described later as a user interface image for selection of the first motion and the second motion by using the score data SD.

Therefore, the calculation unit 21 performs processing as a clip processing unit 21a, a skeleton data processing unit 21b, and a score data processing unit 21c.

The clip processing unit 21a performs a process of generating clips (focused pitch clip 91, comparison pitch clip 93, and enlarged images 92 and 94 to be described later) included in the comparison image (pitch comparison image 60) from the image data VD.

The skeleton data processing unit 21b performs processing of generating a skeleton comparison image 95, an enlarged skeleton image 96, time-series information to be described later, and the like on the basis of the skeleton capture data BD.

The score data processing unit 21c performs processing related to the score data SD acquired from the score data server 3. Specifically, the score data processing unit 21c performs processing of generating the pitch data image 30 to be described later that presents score data for each individual pitch, calculating the similarity/difference between a focused pitch and another pitch by using the score data SD, and the like.

The storage control unit 23 performs processing of storing the received image data VD, skeleton capture data BD, and score data SD in a storage medium. In addition, the storage control unit 23 performs processing of storing various types of data generated by the calculation unit 21 in the storage medium.

The presentation control unit 22 performs control to display various images generated by the processing of the calculation unit 21 in a predetermined form on the terminal device 5. Specifically, the presentation control unit 22 performs processing of displaying the pitch comparison image 60 including the clips, the skeleton images, and the like generated by the calculation unit 21 and the pitch data image 30 on the terminal device 5.

The calculation unit 21, the presentation control unit 22, and the storage control unit 23 described above may be provided in one information processing apparatus, or may be provided separately in a plurality of information processing apparatuses.

The image generated by the server device 2 or the data for image generation is transmitted to the terminal device 5 and displayed on a display unit 5a.

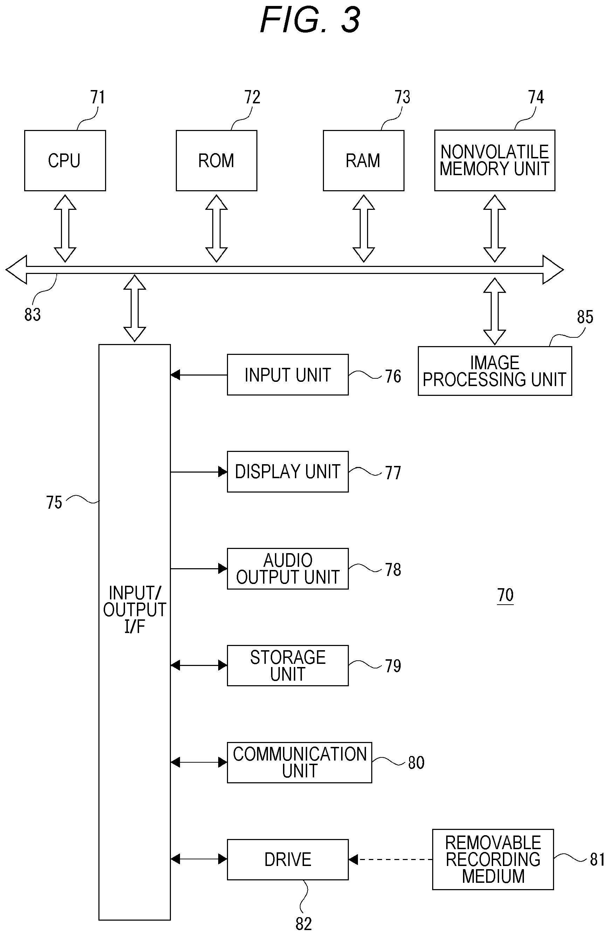

The configuration of an information processing apparatus 70 used in the information analysis system 1 of Figs. 1 and 2 described above will be described. For example, the server device 2, the terminal device 5, the EPTS data generation unit 12 in Fig. 2, and the like can be realized by the information processing apparatus 70 illustrated in Fig. 3.

Furthermore, the information processing apparatus 70 can be configured as, for example, a dedicated workstation, a general-purpose personal computer, a mobile terminal device, and the like.

A CPU 71 of the information processing apparatus 70 illustrated in Fig. 3 performs various types of processing in accordance with a program stored in a ROM 72 or a nonvolatile memory unit 74 such as, for example, an electrically erasable programmable read-only memory (EEP-ROM), or a program loaded from a storage unit 79 to a RAM 73. In addition, the RAM 73 appropriately stores data and the like necessary for the CPU 71 to perform various types of processing.

An image processing unit 85 is configured as a processor that performs various types of image processing. For example, the image processing unit 85 is a processor capable of performing any of image generation processing of a clip or the like, image analysis processing on a captured image or the like, generation processing of an animation image or a 3D image, data base (DB) processing, image effect processing, EPTS data generation processing, and the like.

The image processing unit 85 can be realized by, for example, a CPU, a graphics processing unit (GPU), a general-purpose computing on graphics processing units (GPGPU), an artificial intelligence (AI) processor, and the like that is separate from the CPU 71.

Note that, the image processing unit 85 may be provided as a function in the CPU 71.

The CPU 71, the ROM 72, the RAM 73, the nonvolatile memory unit 74, and the image processing unit 85 are connected to one another through a bus 83. In addition, an input/output interface 75 is also connected to the bus 83.

An input unit 76 including an operation element and an operation device is connected to the input/output interface 75. For example, as the input unit 76, various operation elements and operation devices such as a keyboard, a mouse, a key, a dial, a touch panel, a touch pad, a remote controller, and the like are assumed.

A user operation is detected by the input unit 76, and a signal corresponding to the input operation is interpreted by the CPU 71.

In addition, a display unit 77 including a liquid crystal display (LCD), an organic electro-luminescence (EL) panel, and the like, and an audio output unit 78 including a speaker and the like are integrally or separately connected to the input/output interface 75.

The display unit 77 performs various types of display as a user interface. The display unit 77 includes, for example, a display device provided in a housing of the information processing apparatus 70, a separate display device connected to the information processing apparatus 70, and the like.

The display unit 77 performs various types of image display on a display screen, on the basis of an instruction from the CPU 71. In addition, the display unit 77 displays various operation menus, icons, messages and the like, that is, displays as a graphical user interface (GUI) on the basis of an instruction from the CPU 71.

For example, in a case where the information processing apparatus 70 is considered as the terminal device 5, the display unit 77 displays the pitch data image 30 or the pitch comparison image 60 to be described later, or the like.

In some cases, a storage unit 79 including a solid state drive (SSD), a hard disk drive (HDD), and the like, and a communication unit 80 including a modem and the like are connected to the input/output interface 75.

For example, in a case where the information processing apparatus 70 is considered as the server device 2, the storage unit 79 can be considered as a storage medium in which information is stored by the storage control unit 23.

The communication unit 80 performs communication processing through a transmission path such as the Internet or performs wired/wireless communication with various devices, and communication using bus communication and the like.

In addition, to the input/output interface 75, as necessary, a drive 82 is connected, and a removable recording medium 81 such as a flash memory, a memory card, a magnetic disk, an optical disk, or a magnetooptical disk is appropriately mounted.

By the drive 82, a data file such as an image file, various computer programs, and the like can be read from the removable recording medium 81. The read data file is stored in the storage unit 79, and images and sounds included in the data file are output by the display unit 77 and the audio output unit 78. In addition, the computer programs and the like read from the removable recording medium 81 are installed in the storage unit 79, as necessary.

In the information processing apparatus 70, software can be installed through network communication by the communication unit 80 or the removable recording medium 81. Alternatively, the software may be stored in advance in the ROM 72, the storage unit 79 and the like.

For example, in a case where the information processing apparatus 70 is considered as the server device 2, functions as the calculation unit 21, the presentation control unit 22, and the storage control unit 23 described above are provided by software, and processing by these functions is performed by the CPU 71 and the image processing unit 85.

### <2. Pitch data image>

Fig. 4 illustrates an example of the pitch data image 30. The pitch data image 30 is an interface image that displays a pitch of a pitcher of an arbitrary game for each pitch together with the related information, and allows a user such as an analyst to designate an arbitrary pitch as a focused pitch.

In this example, the pitch data image 30 is provided with a focused pitch selection portion 31, a similarity/difference display button 32, a focused variable selection portion 33, and a similarity/difference display portion 34.

A setting condition unit 41, a filter button 42, a condition input unit 43, a pitch list 44, and the like are displayed in the focused pitch selection portion 31.

The setting condition unit 41 displays setting conditions of a pitch to be listed, such as a game to be listed, a range to be listed, and a pitcher to be listed, for example.

Filtering conditions can be input to the condition input unit 43. The user can input filtering conditions by using, for example, the score data SD with an AND condition or an OR condition set.

When the filter button 42 is operated in a state where the filtering conditions are input in the condition input unit 43, filtering according to the filtering conditions is performed, and the extracted pitches are displayed in the pitch list 44.

In the pitch list 44, one row indicates one pitch. For each pitch, check boxes are provided, and information based on the score data SD such as a pitching time, a batting result, inning, an out count, a strike/ball count, a pitcher, a batter, a runner, a ball speed, a pitch type, and a baseball ground is displayed in association with the pitch.

The user such as an analyst can select a focused pitch by performing an operation of checking the check box in the pitch list 44. The focused pitch is any pitch that the analyst focuses on and desires to compare with another pitch.

The information based on the score data SD for each pitch is displayed in the pitch list 44, so that each pitch can be easily distinguished, and a specific pitch can be easily selected as a focused pitch. For example, when an analyst desires to focus on "a pitch in which a pitcher A struck out a batter B in the top of the fifth inning", the corresponding pitch can be easily selected from the pitch list 44.

The focused variable selection portion 33 in the pitch data image 30 is provided with items of focused variables that can be designated by the user and check boxes thereof.

The focused variables refer to what types of elements are focused for comparison when comparing pitches, and the user can select the focused variables according to the purpose of analysis.

The focused variables are roughly divided into variables related to a game situation and variables related to a pitch.

For example, the following examples can be considered as the variables related to the game situation.
- Pitching time
- Batter, pitcher, catcher, and fielder
- Opponent teams
- Baseball ground
- Inning
- Scores of both teams
- Situation of runner
- Strike/ball count
- Out count

For example, the following examples can be considered as the variables related to pitch.
- Type of pitch
- Pitching course
- Ball speed
- Rotation speed
- Rotation axis
- Vertical/horizontal change amount
- Pitching result

These are examples, and various other focused variables can be considered as the variables related to the game situation and the variables related to the pitch.

When the user operates the similarity/difference display button 32 while selecting the focused variables in the focused variable selection portion 33, the similarity and difference of each pitch with respect to the focused pitch are displayed on the similarity/difference display portion 34.

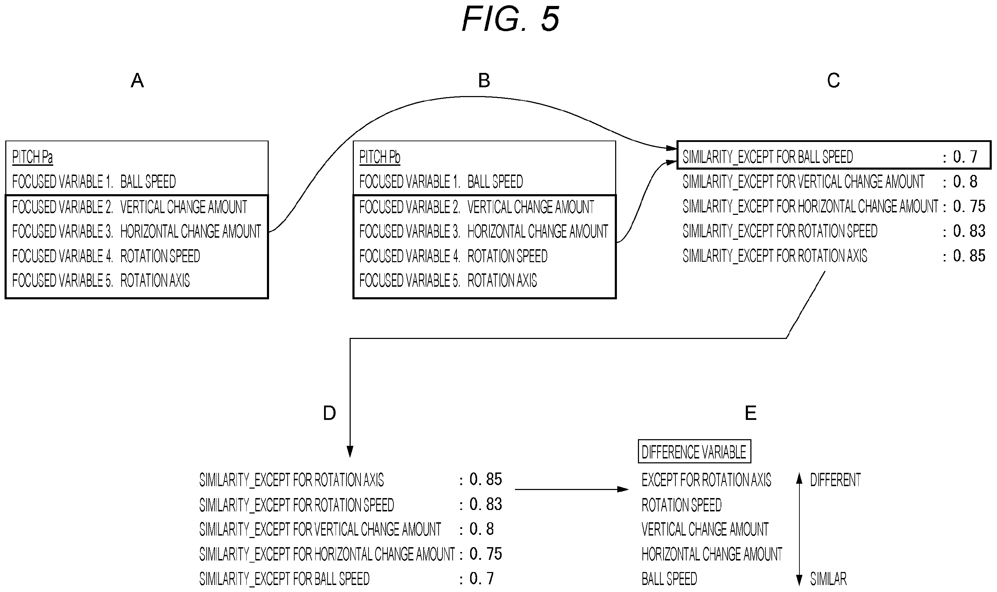

Here, an example of a method of determining the similarity/difference by the calculation unit 21 is illustrated in Fig. 5.

Fig. 5 illustrates a method of determining the similarity/difference between a certain pitch Pa and another pitch Pb. The pitch Pa is a focused pitch selected in the pitch list 44, and the pitch Pb is, for example, one of the other pitches displayed in the pitch list 44. With respect to the focused pitch, the similarity/difference are determined for each of the other pitches.

Now, it is assumed that the user sets, as five focused variables, for example, a ball speed, a vertical change amount, a horizontal change amount, a rotation speed, and a rotation axis in the focused variable selection portion 33.

In this case, the calculation unit 21 first acquires, for each of the pitch Pa that is a focused pitch and another pitch Pb, the values of the ball speed, the vertical change amount, the horizontal change amount, the rotation speed, and the rotation axis (Figs. 5A and 5B). These values can be acquired from the score data SD and the EPTS data.

For example, the calculation unit 21 calculates the similarity by using, except for one focused variable among the five, the values of the other focused variables. Fig. 5C illustrates that the similarity calculated by using the values of the vertical change amount, the horizontal change amount, the rotation speed, and the rotation axis except for the ball speed is "0.7".

In addition, the calculation unit 21 calculates the similarity by using the values of the ball speed, the vertical change amount, the horizontal change amount, the rotation speed, and the rotation axis except for the vertical change amount to be "0.8".

Similarly, the calculation unit 21 calculates the similarity using four focused variables except for the horizontal change amount, except for the rotation speed, and except for the rotation axis to be, for example, "0.75", "0.83", and "0.85", respectively.

Note that, the actual values of the respective focused variables such as the ball speed, the vertical change amount, the horizontal change amount, the rotation speed, and the rotation axis, have different numerical ranges and units. Therefore, for example, it is conceivable that normalization is performed with the largest value as "1" in a case where the values for each focused variable are the same and the smallest value as "0" in a case where the values are the most different, and an average of four focused variables is obtained.

Fig. 5D is obtained by rearranging the similarities calculated as illustrated in Fig. 5C in the descending order. In this example, the similarity is the highest for "except for the rotation axis", and the similarity is the lowest for "except for the ball speed".

Then, as illustrated as difference variables in Fig. 5E, it can be determined that the target pitch Pb is the most different in the rotation axis and the most similar in the ball speed as compared with the pitch Pa that is a focused pitch.

In this manner, the calculation unit 21 similarly determines the similarity/difference of each of the other pitches as a pitch Pb with respect to the pitch Pa which is a focused pitch.

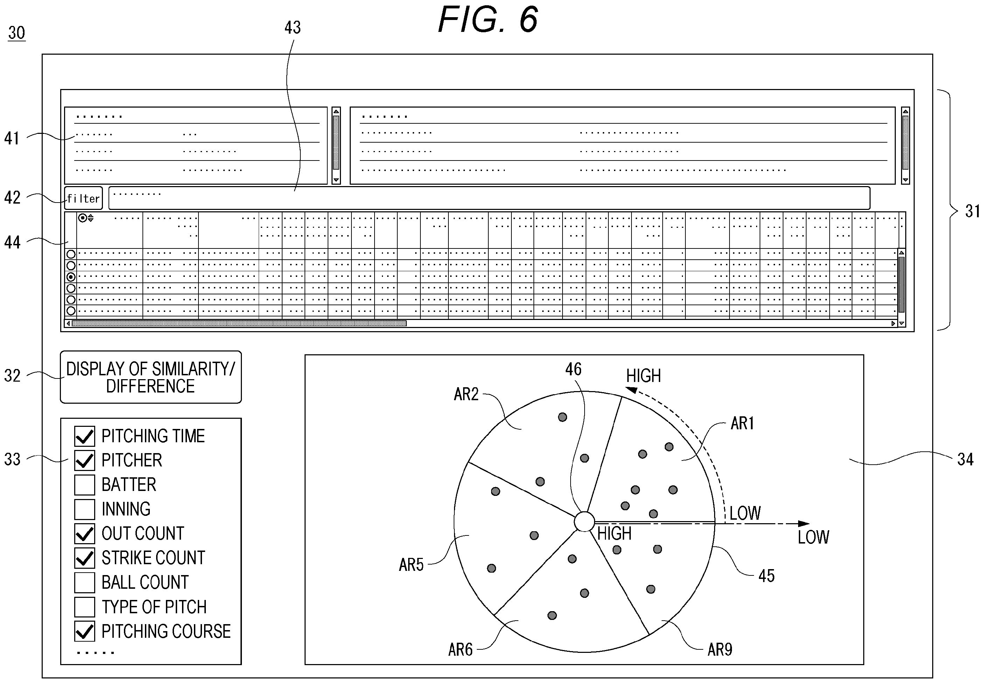

Then, on the basis of such determinations, a plot image 45 is displayed on the similarity/difference display portion 34 as illustrated in Fig. 6.

Note that, Fig. 6 illustrates a state in which a check box is checked for a certain pitch in the pitch list 44 and this is set as a focused pitch.

In addition, in the focused variable selection portion 33, the pitching time at the first position, the pitcher at the second position, the out count at the fifth position, the strike count at the sixth position, and the pitching course at the ninth position are selected in the list of the focused variables.

In this case, in the similarity/difference display portion 34, the plot image 45 is as follows.

The plot image 45 is, for example, a circular image, and a center 46 represents a focused pitch.

The circle is divided into five areas AR1, AR2, AR5, AR6, and AR9 corresponding to five focused variables. Then, in each area, circles each representing one pitch are displayed. In the area AR1, each pitch of a pitch group having the first focused variable that is the most different is indicated by a circle. Similarly, in the area AR2, the area AR5, the area AR6, and the area AR9, each pitch of the pitch group in which each of the second focused variable, the fifth focused variable, the sixth focused variable, and the ninth focused variable is the most different is indicated by a circle.

In each area, the position of each pitch is plotted in terms of the similarity and the difference. For example, the area AR1 can be described that in the radial direction indicated by a one-dot chain line, the similarity is higher toward the center 46, and the similarity is lower toward the outer peripheral side.

In addition, in the circumferential direction indicated by a broken line, the difference of the first focused variable is higher in the counterclockwise direction from the first focused variable having a low difference.

Also in the other areas, each pitch of the pitching group having the focused variable that is the most different is plotted and displayed according to the degrees of the similarity and the difference of the corresponding focused variable.

Such a plot image 45 can present the degree of similarity and difference and the element of difference by dividing the other pitches into areas for different focused variables with respect to the focused pitch selected by the user. Thus, the analyst can easily determine which pitch is another pitch to be compared with the focused pitch.

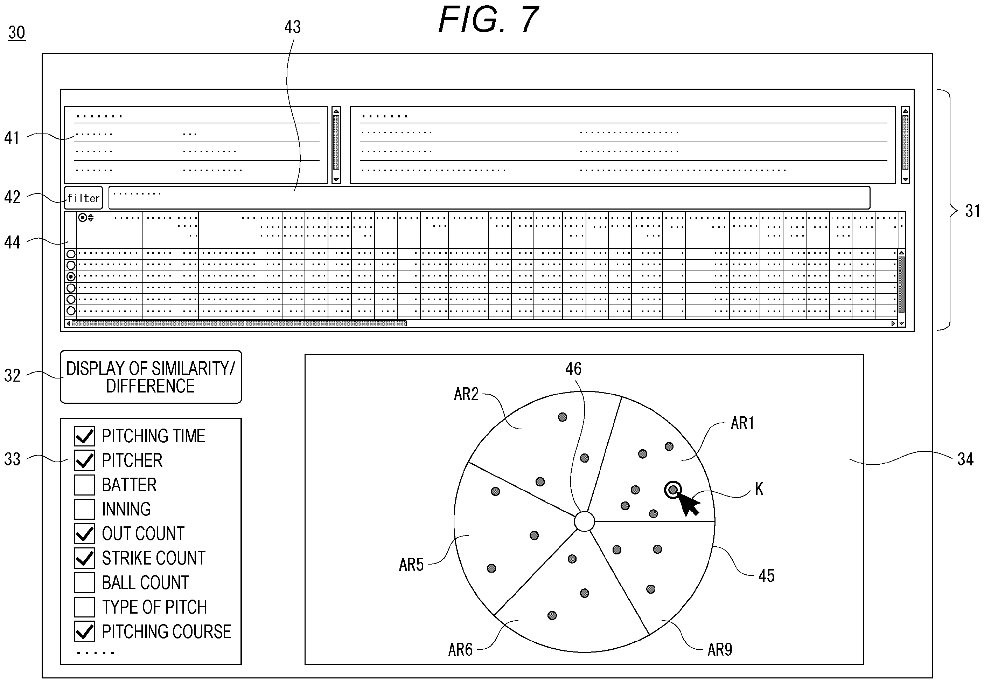

With reference to such a plot image 45, the user selects a comparison pitch to be compared with the focused pitch. Fig. 7 illustrates a state in which the user performs a click operation or the like while designating a certain pitch indicated by a circle with a cursor K. The calculation unit 21 generates the pitch comparison image 60 in which the pitch designated in this way is set as a comparison pitch, and the focused pitch and the comparison pitch can be compared with each other.

### <3. Pitch comparison image>

Next, an example of the pitch comparison image 60 is illustrated in Fig. 8. The pitch comparison image 60 is an image that allows comparison between the focused pitch and the comparison pitch designated by the user.

In this example, the pitch comparison image 60 includes a clip area 61, a skeleton three dimensions (3D) comparison area 62, a time-series data area 63, a playback bar area 64, an operation area 65, and a return button 66.

The return button 66 is, for example, an operation element for returning to the display of the pitch data image 30 described above.

Note that, the images of these areas are examples in which the images are collectively displayed in one screen, but the images of these areas may be separately displayed by different windows, scrolling, page transition, or the like.

In the clip area 61, a focused pitch clip 91, an enlarged image 92, a comparison pitch clip 93, and an enlarged image 94 are displayed.

The focused pitch clip 91 is an actual captured image from the pitching start to the pitching end of a focused pitch. That is, the focused pitch clip 91 is a moving image clip from the frame at the pitching start to the frame at the pitching end in the moving image as the captured image of a pitcher.

The comparison pitch clip 93 is an actual captured image from the pitching start to the pitching end of a comparison pitch.

The focused pitch clip 91 and the comparison pitch clip 93 are displayed side by side and played back at the same time, so that the user can compare the focused pitch with the comparison pitch in actual images.

The focused pitch clip 91 and the comparison pitch clip 93 can be played back or the like at anytime by the user using operation elements in the operation area 65. In the operation area 65, a playback button 110, a pause button 111, and frame advance buttons 112 and 113 are provided. When the user operates the playback button 110, the play back of the focused pitch clip 91 and the comparison pitch clip 93 is started at the same time. By using the pause button 111, the user can pause the playback of the focused pitch clip 91 and the comparison pitch clip 93 at any timing. In addition, by using the frame advance buttons 112 and 113, the user can perform the frame advance of the focused pitch clip 91 and the comparison pitch clip 93 forward and backward.

As a result, by visually recognizing the actual images of the focused pitch clip 91 and the comparison pitch clip 93 in synchronization with each other, the user can confirm, for example, whether the pitching forms are the same or different.

The playback points of the focused pitch clip 91 and the comparison pitch clip 93 are displayed in the playback bar area 64. A playback bar 100 indicates a period from a pitching start time point to a pitching end time point. The pitching start may be, for example, a time point when a pitcher starts a pitching motion, or may be a time point of complete standstill before pitching. Alternatively, the user may designate the timing of the pitching start with an actual image. The pitching end is, for example, a time point when a catcher receives a ball, a time point when a batter strikes, a time point when a pitcher takes a defense posture immediately after pitching, or the like.

The current playback points are indicated by a progress pointer 101 on the playback bar 100. That is, the progress pointer 101 is positioned at the leftmost position on the playback bar 100 before the start of playback, and moves to the right in accordance with the progress of the moving image after the start of playback.

On the playback bar 100, pitching start markers 102a and 102b are displayed. The pitching start marker 102a indicates the pitching start timing of the focused pitch. In addition, the pitching start marker 102b indicates the pitching start timing of the comparison pitch.

In addition, on the playback bar 100, a release marker 104 is displayed. The release marker 104 indicates the release timings of the focused pitch and the comparison pitch.

In this example, the release timings of the focused pitch and the comparison pitch are indicated by one release marker 104. That is, the release timings of both pitches are matched. This is because the focused pitch clip 91 and the comparison pitch clip 93 are synchronously played back using the release timing as a reference.

The release timing, that is, the timing when a ball is moved away from the hand of the pitcher is easily identified on the image. On the other hand, it is difficult to identify the pitching start timing. This is because the length of complete standstill taken by the pitcher immediately before the pitching start varies for each pitch, and the state of complete standstill varies depending on the set position, wind-up, no-wind-up, and the like. Variation of the detection timing of the pitching start causes a shift between the images of the focused pitch clip 91 and the comparison pitch clip 93, which is undesirable for images for comparison. Therefore, synchronous playback is performed using the release timing as a reference. In addition to the fact that the release timing is relatively easy to detect, use of the release timing as a reference is advantageous in that the pitching motions of the focused pitch clip 91 and the comparison pitch clip 93 are easily matched, and thus the images of the focused pitch clip 91 and the comparison pitch clip 93 are made suitable as moving images for comparison.

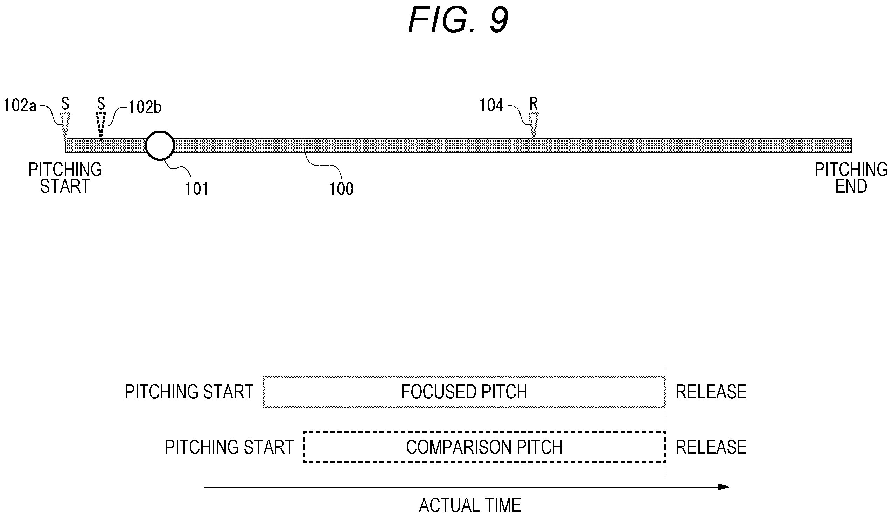

Fig. 9 schematically illustrates that the clips are displayed with the release timings matched. For example, it is assumed that the time lengths from the time determined as a pitching start to the release timing are different between the focused pitch and the comparison pitch.

In this case, by matching the release timings of the focused pitch clip 91 and the comparison pitch clip 93, the pitching start timings are shifted as illustrated in the figure. Therefore, the pitching start timings are individually indicated by the pitching start markers 102a and 102b.

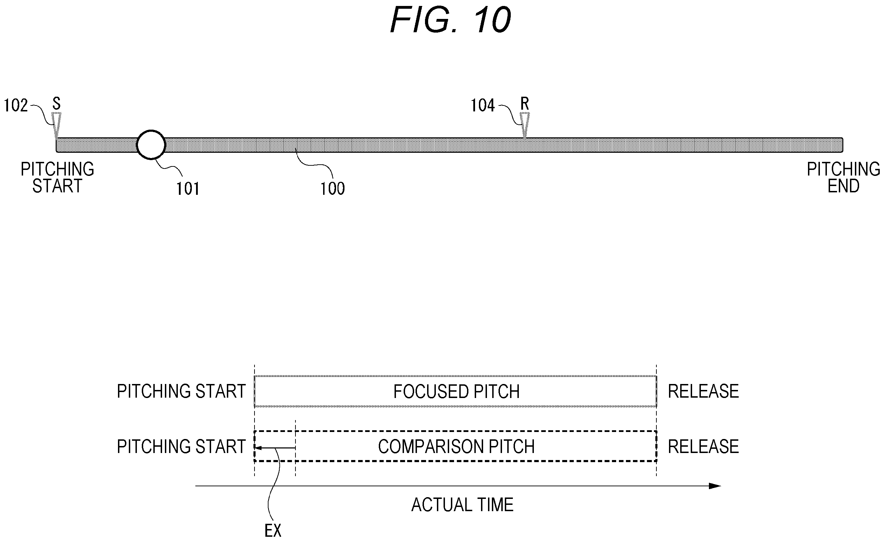

On the other hand, Fig. 10 illustrates an example in which the clips are displayed with both the release timings and the pitching start timings matched. However, it is assumed that the time lengths from the time determined as a pitching start to the release timing are actually different between the focused pitch and the comparison pitch. In this example, the time length is shorter for the comparison pitch. In this case, as indicated by an arrow EX, the time axis of the comparison pitch is adjusted to match the pitching start timing with that of the focused pitch. Specifically, for the comparison pitch clip 93, the time axis is adjusted by performing frame interpolation or decreasing the playback speed.

As a result, the focused pitch and the comparison pitch can be compared while visually recognizing moving images with almost no shift from the pitching start to the release timing.

For example, it is possible that the time axis of the comparison pitch clip 93 is adjusted by the user performing an operation of dragging the pitching start marker 102b that is initially displayed as illustrated in Fig. 9 such that the pitching start time points are matched as illustrated in Fig. 10.

In the pitch comparison image 60 of Fig. 8, the focused pitch clip 91 and the comparison pitch clip 93 are displayed side by side and synchronously played back as described above, so that both pitches can be compared in actual images, but more significant information is presented to the user by other images.

In the enlarged images 92 and 94, clips of the enlarged images of the portion of the hand of the pitcher are displayed in actual images. The enlarged image 92 is a moving image clip of an enlarged image of the hand of the focused pitch, and the enlarged image 94 is a moving image clip of an enlarged image of the hand of the comparison pitch.

The calculation unit 21 extracts the range of the hand of the pitcher (the hand holding a ball) from the captured image, enlarges the extracted range, and generates and displays clip images as the enlarged images 92 and 94. It is conceivable that the enlarged images 92 and 94 that are moving images are played back in synchronization with the focused pitch clip 91 and the comparison pitch clip 93 according to the operation of the playback button 110.

The enlarged images 92 and 94 allow easier comparison of a ball grip or the like between the focused pitch and the comparison pitch.

The skeleton comparison image 95 and the enlarged skeleton image 96 are displayed in the skeleton 3D comparison area 62 in the pitch comparison image 60.

The skeleton comparison image 95 is a 3D moving image formed from the skeleton images of the frames generated on the basis of the skeleton capture data for the focused pitch.

The skeleton capture data obtained from the image enables determination of the position of each joint of the pitcher at the pitching time. An image of the skeleton of each frame can be generated from the position of the joint at each frame timing of the image.

In this example, the skeleton images of the focused pitch indicated by a solid line and the skeleton images of the comparison pitch indicated by a broken line are displayed in an overlaid state. The skeleton images of the focused pitch and the comparison pitch may be displayed in different colors. The difference in the movement between the skeletons of the pitches can be clearly understood by displaying the images in an overlaid state. However, the skeleton comparison image 95 may be in a form in which the skeleton images of the focused pitch and the comparison pitch are displayed side by side.

The skeleton images of both pitches in the skeleton comparison image 95 played back in synchronization with corresponding one of the focused pitch clip 91 and the comparison pitch clip 93. For this reason, the skeleton comparison image 95 is a moving image formed from frames from the pitching start to the pitching end, and is a moving image in which the release timing of the focused pitch clip 91 and the release timing of the comparison pitch clip 93 are matched. The skeleton comparison image 95 as a moving image is played back in synchronization with the focused pitch clip 91 and the comparison pitch clip 93 according to the operation of the playback button 110.

In the skeleton comparison image 95, a portion where joint positions are different by a predetermined amount or more between both pitches is clearly presented. For example, as a highlight display AP, a portion where the joint positions are shifted is clearly indicated. In this example, it is illustrated that the portions of the knee and the ankle are so largely shifted that the portions are indicated as a highlight display AP.

Note that, since the joint position differs in each frame, it is normally assumed that the position of the highlight display AP changes during the display from the pitching start to the pitching end.

Meanwhile, the positions at which the highlight display AP is performed are portions at which the positions of the same joints are different by a predetermined threshold or more, but the highlight display AP may be performed on all the corresponding joint positions, or the highlight display AP may be performed only on the most different joint positions. Furthermore, the highlight display AP may be performed only on the predetermined number of joint positions in descending order of the difference amount such as joint positions at the top two of different amounts.

Here, the positions of the skeleton and the joint vary depending on the person. In a case where the focused pitch and the comparison pitch are pitches of the same pitcher, in the skeleton comparison image 95, the skeleton sizes and joint positions of both pitches match, so that it is easy to recognize the matching points and the different points at the time of the pitching motion.

On the other hand, in a case where the focused pitch and the comparison pitch are pitches of different pitchers, in the skeleton comparison image 95, the skeletons of both pitches do not match in the first place, so that they may not be appropriate as images for comparison. Therefore, in a case where the pitches of different pitchers are compared, for example, the skeleton capture data of the comparison pitch may be displayed with the size adjusted according to the skeleton capture data of the focused pitch.

In the skeleton 3D comparison area 62 in the pitch comparison image 60, the enlarged skeleton image 96 is displayed together with the skeleton comparison image 95.

The enlarged skeleton image 96 is for displaying the enlarged skeleton image of the hand portion of the skeleton comparison image 95. For example, an enlarged image of the skeleton of the hand of the focused pitch and an enlarged image of the skeleton of the hand of the comparison pitch are overlaid and displayed. Of course, these enlarged images may be displayed side by side.

It is conceivable that the enlarged skeleton image 96 as a moving image is also played back in synchronization with the focused pitch clip 91 and the comparison pitch clip 93 according to the operation of the playback button 110.

The enlarged skeleton image 96 allows easier comparison of a ball grip or the like between the focused pitch and the comparison pitch.

In addition, the highlight display AP may be performed on greatly different joint positions in the enlarged skeleton image 96.

Time-series information is displayed in the time-series data area 63 in the pitch comparison image 60. For example, in this example, an acceleration graph 97 and an angle graph 98 of the joint points are displayed as the time-series information.

The acceleration graph 97 indicates the acceleration of the left knee and the right elbow in a period from the pitching start to the pitching end.

The angle graph 98 indicates the angles of the joints of the left knee and the right elbow in a period from the pitching start to the pitching end.

Progress pointers 99 as vertical lines are displayed on these graphs. This progress pointers 99 progress from left to right according to the playback positions in the focused pitch clip 91 and the comparison pitch clip 93. That is, similarly to the progress pointer 101 in the playback bar 100, the progress pointers 99 progress according to playback. The progress pointers 99 clearly indicate the acceleration and the angles of the joint points in the images in the current clip area 61 and the skeleton 3D comparison area 62.

Note that, the example has been described in which the acceleration graph 97 indicating the acceleration of the left knee and the right elbow and the angle graph 98 indicating the angles of the joints are displayed in the time-series data area 63 in Fig. 8, but the present invention is not limited thereto. For example, a graph related to other parts of the body or a graph of information other than acceleration or angle may be displayed in the time-series data area 63. For example, an acceleration graph indicating the acceleration and a speed graph indicating the speed of the center of gravity, right shoulder, and left shoulder of the pitcher's body may be displayed. In addition, for example, an angle graph indicating the angles of the finger joint, the hip joint, and the ankle may be displayed.

### <4. Processing example>

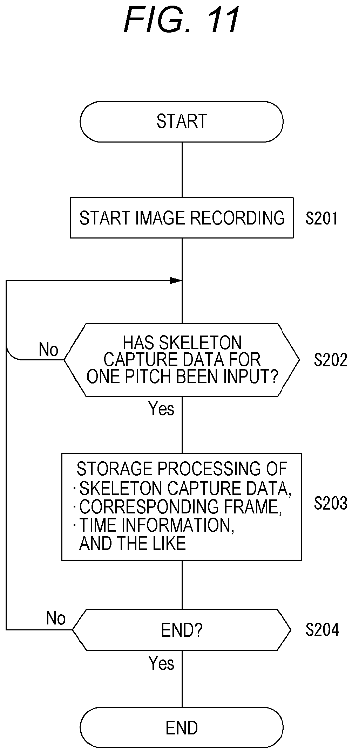

A processing example of the server device 2 for displaying the pitch data image 30 and the pitch comparison image 60 as described above on the terminal device 5 will be described with reference to Figs. 11 to 14. Note that, the processing in each figure is performed as processing of the CPU 71 having the functions of the calculation unit 21, the presentation control unit 22, and the storage control unit 23 in the server device 2, but may be considered as processing by the CPU 71 and the image processing unit 85 or processing by another processor.

Fig. 11 illustrates processing related to acquisition of a captured image and skeleton capture data. This processing is started, for example, from the start point of a game. The processing of Fig. 11 is performed in response to the start of the game and the start of input of the image data VD captured by the imaging devices 10 and the EPTS data (skeleton capture data BD).

Note that, the processing of Fig. 11 may be performed in response to playback of a moving image obtained by recording a game after the game and start of input of an image and EPTS data in response to the playback.

In step S201, the server device 2 starts image recording. That is, processing of storing the input image data VD in a storage medium is started. The moving image obtained by capturing the game is stored in order to generate the focused pitch clip 91 and the comparison pitch clip 93 later.

In step S202, the server device 2 confirms whether or not skeleton capture data for one pitch has been input. That is, it is a confirmation of the input of the skeleton capture data of each frame in a period of one pitch from at least the pitching start to the pitching end.

In a case where skeleton capture data for one pitch has been input, the server device 2 proceeds to step S203 to perform storage control processing related to this one pitch. Specifically, the skeleton capture data in the period of one pitch, the frame number of the corresponding image (hour/minute/second/frame of the moving image), the time information of the pitch, and the like are stored in the storage medium in association with each other.

The above processing ends in step S204, and repeatedly performed until it is determined that the game has been ended, for example.

As a result, for a certain game, the server device 2 can store a moving image of the game and skeleton capture data of each pitch.

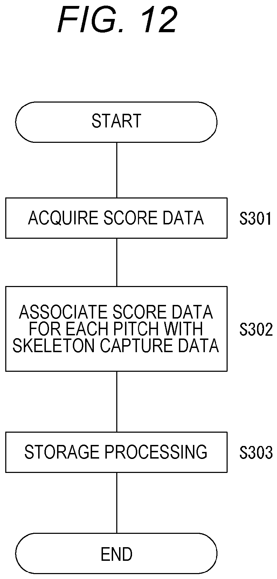

Fig. 12 illustrates processing in a case where the score data SD is received from the score data server 3 during or after a game, for example.

After acquiring the score data SD in step S301, the server device 2 performs processing of associating the data content of the score data SD for each pitch with the corresponding skeleton capture data in step S302. Then, in step S303, the server device 2 stores the data of each pitch and the skeleton capture data in the storage medium in association with each other. As a result, the data for stored pitches can be displayed in the pitch list 44 in the pitch data image 30 in Fig. 4.

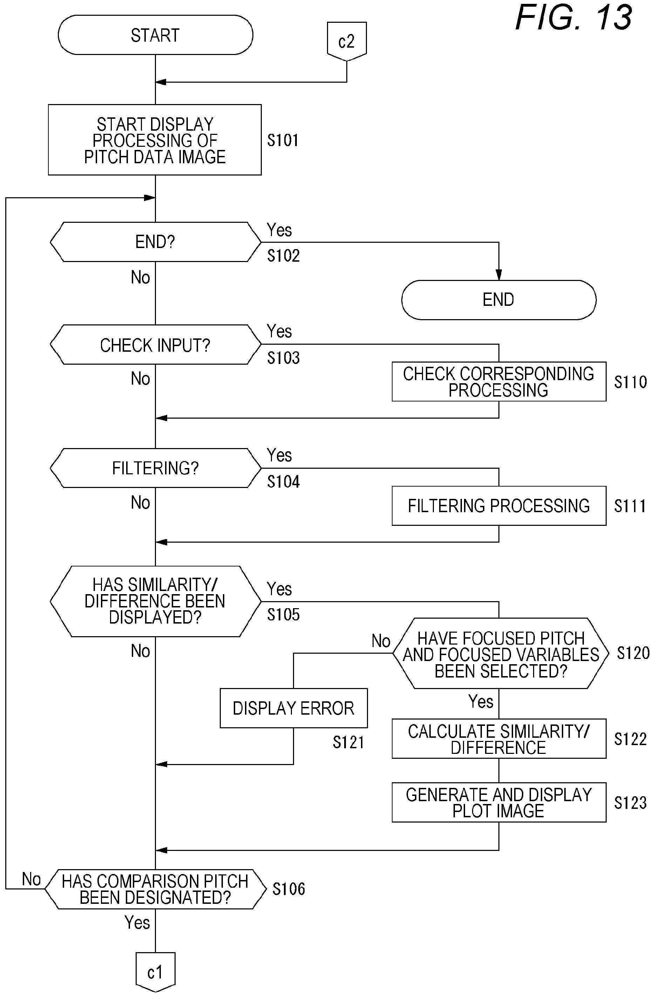

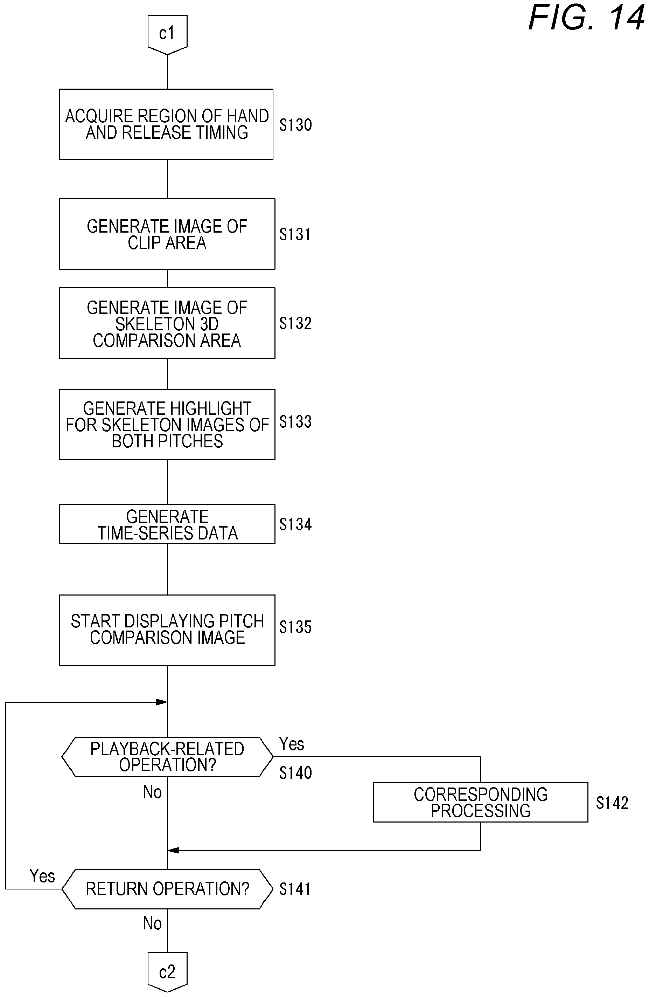

Figs. 13 and 14 illustrate processing for presenting the analysis information according to the operation of a user of the terminal device 5, for example, an analyst of a baseball team. Note that, "c1" and "c2" in Figs. 13 and 14 indicate connections of flowcharts.

In step S101 of Fig. 13, the server device 2 performs processing of causing the display unit 5a of the terminal device 5 to start displaying the pitch data image 30. For example, as illustrated in Fig. 4, each pitch is displayed as the pitch list 44.

Thereafter, the server device 2 repeats the determinations in steps S101 to S106 until it is determined in step S102 that the display has been ended.

In step S103, the server device 2 monitors a check input operation by the user. For example, the server device 2 monitors an operation of checking in a check box in the pitch list 44 and an operation of checking in a check box in the focused variable selection portion 33.

When the user performs the checking operation, the server device 2 proceeds to step S110 and performs the check corresponding processing. For example, the server device 2 sets the pitch checked in the pitch list 44 as a focused pitch. In addition, the server device 2 sets the focused variables checked in the focused variable selection portion 33 as focused variables used for determination of the similarity/difference.

In step S104, the server device 2 monitors whether or not the user has operated the filter button 42. When detecting the operation of the filter button 42, the server device 2 proceeds to step S111 to perform the filtering processing according to the input filtering conditions, and update the pitch to be displayed in the pitch list 44.

In step S105, the server device 2 monitors whether or not the user has operated the similarity/difference display button 32. When detecting the operation of the similarity/difference display button 32, the server device 2 proceeds to step S120 to confirm whether or not the focused pitch and the focused variables have been selected. If either of the focused pitch and the focused variables has not been selected, the server device 2 displays an error in step S121, and returns to a monitoring loop from step S102 to step S106.

In a case where it is determined in step S120 that the focused pitch and the focused variables have been selected, the server device 2 proceeds to step S122 to calculate the similarity/difference between the focused pitch and each of the other pitches as described with reference to Fig. 5. Then, according to the calculation result, the server device 2 performs control to generate and display the plot image 45 in step S123.

In a state where the plot image 45 is displayed, the user can select a comparison pitch. In a case where the user performs an operation of designating a certain pitch in the plot image 45, the server device 2 proceeds from step S106 to step S130 in Fig. 14 to perform processing for displaying the pitch comparison image 60.

First, in step S130, the server device 2 acquires an actual image for each of the focused pitch and the comparison pitch, and specifies a pixel region showing a hand holding a ball in the image of each frame. In addition, a frame of the release timing is specified in the actual image for each of the focused pitch and the comparison pitch.

In step S131, the server device 2 generates images to be displayed in the clip area 61. That is, the server device 2 generates the focused pitch clip 91 and the comparison pitch clip 93. This is processing of extracting a moving image of a pitcher during a period of the corresponding pitch from the stored game images and generating the clips. In addition, the server device 2 enlarges and extracts the hand portion of the image of the pitcher to generate the enlarged images 92 and 94.

In step S132, the server device 2 generates images in the skeleton 3D comparison area 62. That is, the server device 2 generates the skeleton comparison image 95 and the enlarged skeleton image 96. The skeleton comparison image 95 and the enlarged skeleton image 96 are generated on the basis of skeleton capture data of the corresponding pitches.

In step S133, the server device 2 performs highlight display processing for the skeleton images of both pitches. That is, portions in which the joint positions are different by a predetermined amount or more in each frame in the period from the pitching start to the pitching end is determined, and are set as portions on which the highlight display AP is performed.

In step S134, the server device 2 generates time-series data to be displayed in the time-series data area 63. For example, the server device 2 generates images as the acceleration graph 97 and the angle graph 98 or information for image display.

Then, in step S135, the server device 2 transmits images and information necessary for image display to the terminal device 5, and causes the terminal device 5 to display the pitch comparison image 60.

While the pitch comparison image 60 is displayed on the terminal device 5, the server device 2 monitors the operation on the screen in steps S140 and S141.

In step S140, the operation of each button in the operation area 65 is monitored, and according to the operation, corresponding processing is performed in step S142. That is, playback, pause, frame advance in the backward direction or the forward direction, and the like are controlled.

However, these playback-related processing may be performed not by the server device 2 but by an application program in the terminal device 5.

When detecting the operation of the return button 66, the server device 2 returns from step S141 to step S101 of Fig. 13, to return to the state where the pitch data image 30 is being displayed.

Through the processing of Figs. 13 and 14 described above, the server device 2 can cause the terminal device 5 to display the pitch data image 30 and the pitch comparison image 60, enabling provision of information that allows easy comparison of a plurality of pitching motions to the user such as an analyst.

### <5. Summary and modification>

According to the above-described embodiment, the following effects can be obtained.

The information processing apparatus 70 that functions as the server device 2 according to the embodiment includes the calculation unit 21 that performs processing of generating a comparison image between a first motion that is one sample of a specific motion that is a human action and a second motion that is another sample of the specific motion by using the skeleton capture data of the first motion and the skeleton capture data of the second motion.

For example, the pitch comparison image 60 as illustrated in Fig. 8 is generated and displayed on the basis of the skeleton capture data, so that different points between a plurality of samples for the same specific motion can be presented in a state a user can easily recognize.

Note that, in the embodiment, the pitching motion of baseball or softball is taken as an example of the specific motion, but the comparison image can be generated for other specific motions.

For example, the present invention may be applied to the batting of baseball or softball.

Furthermore, it is also possible to generate a comparison image using the skeleton capture data for a motion of other sports, for example, a serve of tennis, volleyball, and table tennis, hammer throw, javelin, dart, or the like as a specific motion. In addition, the present invention is not limited to sports, and can also be applied to analysis of specific motions such as play motions and daily motions.

In the embodiment, the specific motion is defined as a pitching motion of baseball or softball.

The pitch comparison image 60 for comparing the focused pitch and the comparison pitch as two samples of the pitching motion is effective for the pitching analysis of baseball. For example, it is effective in a case where a user wants to find a pitch to be focused (analyzed) and a similar pitch in the past, and know a difference between the similar pitches.

Furthermore, it is possible to provide a useful comparison image that enables various analyses such as a difference between a plurality of samples of the same pitcher, a difference under various conditions such as a strike/ball count, an out count, a runner, and an opponent batter, a difference in a case where the types of pitch are different, and a difference in the same type of pitch.

In the embodiment, the pitch comparison image 60 generated by the calculation unit 21 includes clip images that are moving images obtained by capturing the focused pitch, which is the first motion and the comparison pitch, which is the second motion.

In the pitch comparison image 60, the focused pitch clip 91 and the comparison pitch clip 93, which are the actual moving images are displayed for the focused pitch and the comparison pitch, which are two samples of, for example, the pitching motion, so that an analyst can easily recognize the contents visually. For example, it is also possible to recognize which pitcher's pitch is being compared, the situation of the samples, and the like. In addition, it is easy to confirm the focused pitch and the comparison pitch set as samples. Even if the focused pitch or the comparison pitch has been selected as a sample by mistake, the analyst can immediately recognize the sample is not correct from the actual figure of the pitcher, the trajectory of the ball, and the like.

In the embodiment, the pitch comparison image 60 generated by the calculation unit 21 includes the skeleton comparison image 95 that presents the skeleton image indicating the skeleton at each time point of the first motion (focused pitch) and the skeleton image indicating the skeleton at each time point of the second motion (comparison pitch) in a comparable manner.

The skeleton comparison image 95 is displayed in the pitch comparison image 60, so that whether the pitching motions are the same or different can be easily recognized as the movement of the skeleton of the pitcher.

Note that, although the example has been described in which the skeleton comparison image 95 in Fig. 8 is displayed as a moving image in synchronization with the focused pitch clip 91 and the like, the skeleton comparison image 95 may be displayed as a still image at each timing. For example, the skeleton comparison image 95 at the timing at which the difference between the skeleton of the focused pitch and the skeleton of the comparison pitch is the largest or the timing at which the number of highlight displays AP is the largest may be displayed as a still image.

In addition, although the clip area 61 and the skeleton 3D comparison area 62 are separated in Fig. 8, the areas are not necessarily separated, and for example, the skeleton image of the focused pitch may be overlaid and displayed on the focused pitch clip 91, and the skeleton image of the comparison pitch may be overlaid and displayed on the comparison pitch clip 93.

In the embodiment, the example has been described in which the calculation unit 21 generates the skeleton comparison image 95 as an image in which the skeleton image of the first motion and the skeleton image of the second motion (comparison pitch) are overlaid and displayed.

As a result, a slight difference in the pitching motion can be easily recognized from the shift of the skeleton images, which is effective information for analysis of the pitching form, visualization of the correction portion of the pitching form, and the like.

Note that, as an example of the skeleton comparison image 95, the skeleton images are not limited to be overlaid and displayed, and may be displayed side by side, for example. Alternatively, the skeletons may be compared by overlaying and displaying the corresponding skeleton images on the focused pitch clip 91 and the comparison pitch clip 93.

In the embodiment, the example has been described in which the calculation unit 21 performs processing of presenting different points between the skeleton image of the first motion and the skeleton image of the second motion in the skeleton comparison image 95.

For example, in the skeleton comparison image 95 and the enlarged skeleton image 96, the portions greatly different in the skeletons between the focused pitch and the comparison pitch are clearly indicated by the highlight display AP, so that the different points can be more easily recognized. Highlight display of the different points for each frame by using the skeleton comparison image 95 and the enlarged skeleton image 96 as moving images is also effective information for diagnosing and correcting the pitching form of the pitcher.

In the embodiment, the pitch comparison image 60 generated by the calculation unit 21 includes the enlarged skeleton image 96 that presents the skeleton image in which the skeleton of the hand at each time point of the first motion is enlarged and the skeleton image in which the skeleton of the hand at each time point of the second motion is enlarged in a comparable manner.

From the skeleton comparison image 95 only, it is difficult to recognize fine portions such as a ball grip, a rotation of a wrist, and a return of a wrist of a pitcher. Meanwhile, the movement of a hand or fingers is important for a pitch. The enlarged skeleton image 96 is generated and displayed, so that fine movement of the fingers of the pitcher can also be observed.

In addition, the highlight display AP is performed also in the enlarged skeleton image 96, so that the different points can be easily recognized. Note that, the highlight display AP may be performed in only one of the skeleton comparison image 95 and the enlarged skeleton image 96.

In the embodiment, the clip images, which are images obtained by capturing the first motion and the second motion, and the skeleton comparison image 95 are images synchronously displayed.

When the skeleton comparison image 95 is a moving image synchronously played back with the focused pitch clip 91 and the comparison pitch clip 93, it is possible to compare the postures and movements in the actual moving images and the movement of the skeleton at each timing of the pitching form, enabling easy recognition of the difference between the pitches.

In the embodiment, the clip images and the skeleton comparison image are images synchronously displayed in a state in which release timings of the pitching motions are matched.

In a case where the focused pitch and the comparison pitch are synchronously played back, sometimes the start timings of the pitching motions are hardly identified on the captured image. For example, there may be cases where a pitching form is different, a pitcher makes a quick motion according to a situation, or changes the time of holding a ball for throwing off the timing of a batter. In addition, it is difficult to determine the complete standstill state before pitching, and the complete standstill time varies depending on the pitch. Therefore, in a case where the pitching start is used as a reference, the pitching motions of the focused pitch clip 91 and the comparison pitch clip 93 may be greatly shifted. On the other hand, the release timings are easily identified from the images. The release timings are matched, so that the pitching motions of the focused pitch clip 91 and the comparison pitch clip 93 are less likely to be greatly shifted in terms of timing. That is, the focused pitch clip 91 and the comparison pitch clip 93 can be easily generated as moving images for comparison, and can be images allowing easy comparison. A similar applies to the skeleton comparison image 95.

In the embodiment, the pitch comparison image 60 generated by the calculation unit 21 includes the time-series information that presents the movement of the joint at each time point of the first motion and the movement of the joint at each time point of the second motion in a comparable manner.

In the pitch comparison image 60, the time-series information that enables comparison of the movements of the joints between the focused pitch and the comparison pitch is displayed as the acceleration graph 97, a speed graph (not illustrated), the angle graph 98, and the like. Such time-series information expresses a difference in movement in a series of pitching motions at a glance, and is useful for presenting whether the motions are the same or different.

In the embodiment, the playback points of the clip images are indicated on the time axis of the time-series information.

That is, the progress pointers 99 are displayed in the acceleration graph 97 and the angle graph 98 and progress in accordance with the playbacks of the focused pitch clip 91 and the comparison pitch clip 93, so that the analyst can easily grasp at which time point of the pitching form the difference in the movement of the joint appears or the like.

In the embodiment, the calculation unit 21 performs processing of generating a user interface image for a use to select the first motion and the second motion by using the score data SD of a game.

The pitch data images 30 in Figs. 4, 6, and 7 are provided as examples of the user interface image. The calculation unit 21 generates the pitch data image 30 including the pitch list 44 using the function of the score data processing unit 21c and causes the display unit 5a to display the generated pitch data image 30. In particular, various types of information (inning, the number of pitches, a strike/ball count, an out count, an opponent batter, and the like.) based on the score data are clearly indicated for each pitch listed in the pitch list 44. This allows the analyst to easily select a focused pitch from the pitch list 44.

In the embodiment, the example has been described in which the calculation unit 21 perform processing of calculating the degree of similarity or difference between the pitching motion selected as the first motion and other pitching motions by using the score data, and generating the image presenting the other pitching motions with the calculation result reflected.

For example, by presenting the plot image 45 according to the similarity/difference as illustrated in Figs. 6 and 7, the similarity and the difference of each of the other pitches with respect to the focused pitch are visualized. This allows the analyst to easily select a pitch suitable for comparison with the focused pitch as a comparison pitch.

In the embodiment, the example has been described in which the calculation unit 21 sets a comparison pitch according to a designation operation for an image that presents other pitching motions with reflection of a calculation result of the degrees of similarity or difference between the pitching motion selected as the first motion and the other pitching motions, that is, the plot image 45.

That is, the user can select the comparison pitch by an operation of designating another pitch plotted in the plot image 45 in which the similarity and the difference with respect to the focused pitch are visualized. This allows the analyst to easily select a pitch suitable for comparison with the focused pitch as a comparison pitch.

In the embodiment, an example has been described in which each of a plurality of focused points related to the pitching motion can be selected as focused variables, and the calculation unit 21 calculates the degree of similarity or difference between a pitching motion selected as the first motion and other pitching motions by using focused variables selected by a user operation.

The calculation unit 21 calculates the similarity /difference of each pitch with respect to the focused pitch in response to selection of the focused variables by the analyst, whereby the similarity/difference reflecting the factor that the analyst desires to focus on are displayed in the plot image 45. This makes it possible to present the similarity /difference according to the purpose of analysis by the analyst.

In the embodiment, the focused variables include items related to a game situation.

By including items related to the game situation described above, such as a pitching time, a batter, a runner, and an out count, for example, as focused variables, the analyst can analyze the pitching motion according to the situation the pitcher is in. In particular, the mind of the pitcher and the content of the pitch greatly change depending on the game situation, and thus it is useful that the game situation can be reflected in the analysis.

In the embodiment, the focused variables include items related to a pitch.

By including the items related to the pitch described above, such as a pitch type, a pitch course, a ball speed, and a rotation speed, for example, as focused variables, it is possible to cope with a desire of an analyst in a case where the analyst desires to analyze a pitch itself of the pitcher. For example, it is useful for confirming a difference in a pitching form between different types of pitch, analyzing a relationship between a ball speed and a pitching motion, and the like.

In the embodiment, for example, for N (for example, 5 in the example of Fig. 5) focused variables selected by the user, the calculation unit 21 performs processing of calculating N similarities as similarities using (N - 1) focused variables excluding one focused variable (see Figs. 5A to 5C). As a result, the similarity reflecting the selected focused variables can be obtained, and the similarities each excluding the influence of one focused variable can be obtained. This also indicates the degree of the influence of each focused variable in two pitches.

In addition, the calculation unit 21 rearranges N similarities in descending order to obtain the degree of difference between the focused variables each excluded for the corresponding one of the N similarities (see Figs. 5D and 5E). By making the degree of similarity reflected the degree of influence of one focused variable, the degree of difference appearing between two pitches can be determined by rearranging N similarities.

A program according to the embodiment is a program for causing, for example, a CPU, a digital signal processor (DSP), an AI processor, and the like, or the information processing apparatus 70 including the CPU, the DSP, or the AI processor, to perform the processing illustrated in Figs. 11 to 14.

That is, the program according to the embodiment is a program that causes the information processing apparatus 70 to perform the processing of generating a comparison image between the first motion that is one sample of a specific motion that is a human action and the second motion that is another sample of the specific motion by using the skeleton capture data of the first motion and the skeleton capture data of the second motion.

With such a program, the information processing apparatus 70 included in the information analysis system 1 according to the embodiment can be implemented in, for example, a computer device, a mobile terminal device, or a device capable of executing other information processing.

Such a program can be recorded in advance in an HDD as a recording medium built in a device such as a computer device and the like, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

In addition, such a program can be installed from the removable recording medium into a personal computer or the like, or can be downloaded from a download site over a network such as a local area network (LAN), the Internet, or the like.

In addition, such a program is suitable for providing the information processing apparatus 70 included in the information analysis system 1 according to the embodiment in a wide range. For example, the program is downloaded to a mobile terminal device such as a smartphone, a tablet, and the like, an imaging device, a mobile phone, a personal computer, a game device, a video device, a personal digital assistant (PDA), and the like, and thus the smartphone and the like can function as the information processing apparatus 70 included in the information analysis system 1 of the present disclosure.

Note that, the effects described in the present specification are merely examples and are not limited, and other effects may be provided.

Note that, the present technology can also have the following configurations.
(1) An information processing apparatus including:
   a calculation unit that performs processing of generating a comparison image between a first motion that is one sample of a specific motion that is a human action and a second motion that is another sample of the specific motion by using skeleton capture data of the first motion and skeleton capture data of the second motion.
(2) The information processing apparatus according to (1), in which
   the specific motion is a pitching motion of baseball or softball.
(3) The information processing apparatus according to (1) or (2), in which
   the comparison image generated by the calculation unit includes clip images that are moving images obtained by capturing the first motion and the second motion.
(4) The information processing apparatus according to any one of (1) to (3), in which
   the comparison image generated by the calculation unit includes a skeleton comparison image that presents a skeleton image indicating a skeleton at each time point of the first motion and a skeleton image indicating a skeleton at each time point of the second motion in a comparable manner.
(5) The information processing apparatus according to (4), in which
   the calculation unit generates the skeleton comparison image as an image in which a skeleton image of the first motion and a skeleton image of the second motion are overlaid and displayed.
(6) The information processing apparatus according to (4) or (5), in which
   the calculation unit performs processing of presenting different points between a skeleton image of the first motion and a skeleton image of the second motion in the skeleton comparison image.
(7) The information processing apparatus according to any one of (1) to (6), in which
   the comparison image generated by the calculation unit includes an enlarged skeleton image that presents a skeleton image obtained by enlarging a skeleton of a hand at each time point of the first motion and a skeleton image obtained by enlarging a skeleton of a hand at each time point of the second motion in a comparable manner.
(8) The information processing apparatus according to any one of (1) to (7), in which
   the comparison image generated by the calculation unit includes:
   clip images that are moving images obtained by capturing the first motion and the second motion; and
   a skeleton comparison image that is an image that presents a skeleton image indicating a skeleton at each time point of the first motion and a skeleton image indicating a skeleton at each time point of the second motion in a comparable manner, and
   the clip images and the skeleton comparison image are images synchronously displayed.
(9) The information processing apparatus according to (8), in which
   the specific motion is a pitching motion of baseball or softball, and
   the clip images and the skeleton comparison image are images synchronously displayed with release timings of pitching motions matched.
(10) The information processing apparatus according to any one of (1) to (9), in which
   the comparison image generated by the calculation unit includes time-series information that presents a movement of a joint at each time point of the first motion and a movement of a joint at each time point of the second motion in a comparable manner.
(11) The information processing apparatus according to (10), in which
   the comparison image generated by the calculation unit includes clip images that are moving images obtained by capturing the first motion and the second motion, and
   playback points of the clip images are indicated on a time axis in the time-series information.
(12) The information processing apparatus according to any one of (1) to (11), in which
   the specific motion is a pitching motion of baseball or softball, and
   the calculation unit performs processing of generating a user interface image for selection of the first motion and the second motion by using score data of a game of baseball or softball.
(13) The information processing apparatus according to (12), in which
   the calculation unit performs processing of calculating degree of similarity or difference between a pitching motion selected as the first motion and other pitching motions by using the score data, and generating an image presenting other pitching motions on which the calculation result is reflected.
(14) The information processing apparatus according to (13), in which
   each of a plurality of focused points related to a pitching motion is able to be selected as focused variables, and
   the calculation unit calculates degree of similarity or difference between a pitching motion selected as the first motion and other pitching motions by using focused variables selected by a user operation.
(15) The information processing apparatus according to (14), in which
   the focused variables include at least one of an item related to a game situation or an item related to a pitch.
(16) The information processing apparatus according to (14) or (15), in which
   in processing of calculating degree of similarity between a pitching motion selected as the first motion and other pitching motions,
   for the N focused variables selected, the calculation unit performs processing of calculating N similarities as similarities each by using (N - 1) focused variables excluding one focused variable, where N is a natural number of 2 or more.
(17) The information processing apparatus according to (16), in which
   the calculation unit rearranges the N similarities in descending order to calculate degree of difference between the focused variables each excluded for corresponding one of the N similarities.
(18) An information processing method including:
   performing, by an information processing apparatus, processing of generating a comparison image between a first motion that is one sample of a specific motion that is a human action and a second motion that is another sample of the specific motion by using skeleton capture data of the first motion and skeleton capture data of the second motion.
(19) A program causing an information processing apparatus to perform processing of generating a comparison image between a first motion that is one sample of a specific motion that is a human action and a second motion that is another sample of the specific motion by using skeleton capture data of the first motion and skeleton capture data of the second motion.
(20) An information analysis system including:
   an imaging device; and
   an information processing apparatus including a calculation unit that performs processing of generating a comparison image between a first motion that is one sample of a specific motion that is a human action and a second motion that is another sample of the specific motion by using skeleton capture data of the first motion and skeleton capture data of the second motion.

### REFERENCE SIGNS LIST

- 1: Information analysis system
- 2: Server device
- 3: Weather measurement device
- 4: Sensor
- 5: Terminal device
- 5a: Display unit
- 6: Terminal device
- 10: Imaging device
- 11: Recording unit
- 12: EPTS data generation unit
- 21: Exercise load calculation unit
- 22: Presentation information generation unit
- 23: Storage control unit
- 30: Analysis dashboard
- 33: Exercise load information
- 70: Information processing apparatus
- 71: CPU

## Claims

1. An information processing apparatus comprising:
a calculation unit that performs processing of generating a comparison image between a first motion that is one sample of a specific motion that is a human action and a second motion that is another sample of the specific motion by using skeleton capture data of the first motion and skeleton capture data of the second motion.

2. The information processing apparatus according to claim 1, wherein
the specific motion is a pitching motion of baseball or softball.

3. The information processing apparatus according to claim 1, wherein
the comparison image generated by the calculation unit includes clip images that are moving images obtained by capturing the first motion and the second motion.

4. The information processing apparatus according to claim 1, wherein
the comparison image generated by the calculation unit includes a skeleton comparison image that presents a skeleton image indicating a skeleton at each time point of the first motion and a skeleton image indicating a skeleton at each time point of the second motion in a comparable manner.

5. The information processing apparatus according to claim 4, wherein
the calculation unit generates the skeleton comparison image as an image in which a skeleton image of the first motion and a skeleton image of the second motion are overlaid and displayed.

6. The information processing apparatus according to claim 4, wherein
the calculation unit performs processing of presenting different points between a skeleton image of the first motion and a skeleton image of the second motion in the skeleton comparison image.

7. The information processing apparatus according to claim 1, wherein
the comparison image generated by the calculation unit includes an enlarged skeleton image that presents a skeleton image obtained by enlarging a skeleton of a hand at each time point of the first motion and a skeleton image obtained by enlarging a skeleton of a hand at each time point of the second motion in a comparable manner.

8. The information processing apparatus according to claim 1, wherein
the comparison image generated by the calculation unit includes:
clip images that are moving images obtained by capturing the first motion and the second motion; and
a skeleton comparison image that is an image that presents a skeleton image indicating a skeleton at each time point of the first motion and a skeleton image indicating a skeleton at each time point of the second motion in a comparable manner, and
the clip images and the skeleton comparison image are images synchronously displayed.

9. The information processing apparatus according to claim 8, wherein
the specific motion is a pitching motion of baseball or softball, and
the clip images and the skeleton comparison image are images synchronously displayed with release timings of pitching motions matched.

10. The information processing apparatus according to claim 1, wherein
the comparison image generated by the calculation unit includes time-series information that presents a movement of a joint at each time point of the first motion and a movement of a joint at each time point of the second motion in a comparable manner.

11. The information processing apparatus according to claim 10, wherein
the comparison image generated by the calculation unit includes clip images that are moving images obtained by capturing the first motion and the second motion, and
playback points of the clip images are indicated on a time axis in the time-series information.

12. The information processing apparatus according to claim 1, wherein
the specific motion is a pitching motion of baseball or softball, and
the calculation unit performs processing of generating a user interface image for selection of the first motion and the second motion by using score data of a game of baseball or softball.

13. The information processing apparatus according to claim 12, wherein
the calculation unit performs processing of calculating degree of similarity or difference between a pitching motion selected as the first motion and other pitching motions by using the score data, and generating an image presenting other pitching motions on which the calculation result is reflected.

14. The information processing apparatus according to claim 13, wherein
each of a plurality of focused points related to a pitching motion is able to be selected as focused variables, and
the calculation unit calculates degree of similarity or difference between a pitching motion selected as the first motion and other pitching motions by using focused variables selected by a user operation.

15. The information processing apparatus according to claim 14, wherein
the focused variables include at least one of an item related to a game situation or an item related to a pitch.

16. The information processing apparatus according to claim 14, wherein
in processing of calculating degree of similarity between a pitching motion selected as the first motion and other pitching motions,
for the N focused variables selected, the calculation unit performs processing of calculating N similarities as similarities each by using (N - 1) focused variables excluding one focused variable, where N is a natural number of 2 or more.

17. The information processing apparatus according to claim 16, wherein
the calculation unit rearranges the N similarities in descending order to calculate degree of difference between the focused variables each excluded for corresponding one of the N similarities.

18. An information processing method comprising:
performing, by an information processing apparatus, processing of generating a comparison image between a first motion that is one sample of a specific motion that is a human action and a second motion that is another sample of the specific motion by using skeleton capture data of the first motion and skeleton capture data of the second motion.

19. A program causing:
an information processing apparatus to perform processing of generating a comparison image between a first motion that is one sample of a specific motion that is a human action and a second motion that is another sample of the specific motion by using skeleton capture data of the first motion and skeleton capture data of the second motion.

20. An information analysis system comprising:
an imaging device; and
an information processing apparatus including a calculation unit that performs processing of generating a comparison image between a first motion that is one sample of a specific motion that is a human action and a second motion that is another sample of the specific motion by using skeleton capture data of the first motion and skeleton capture data of the second motion.
